# EUROPEAN PATENT APPLICATION

(11) **EP 3 829 139 A1**
(43) Date of publication of application: **02.06.2021**
(21) Application number: 20208870.4
(22) Date of filing: 20.11.2020
(51) Int. Cl.: H04L 29/08, G06F 16/11, G06F 16/22, G06F 16/2455, G06F 16/901

(54) **DISTRIBUTED STORAGE SYSTEM FOR STORING CONTEXT DATA**

(30) Priority: 27.11.2019 FR 1913324
(71) Applicant: Amadeus S.A.S., 06410 Biot (FR)
(72) Inventor: ORLINSKI, Anael, 06410 BIOT (FR); LAMESCH, Matthias, 06410 BIOT (FR); DEMARET, Pierre-Jean, 06410 BIOT (FR); ZHANG, Qiyang, 06410 BIOT (FR); DUGAS-PHOCION, Guillaume Charles, 06410 BIOT (FR); CORNIGLION, Vincent, 06410 BIOT (FR)
(74) Representative: Marks & Clerk France

(57) **Abstract**

The invention relates to a distributed storage system (1) for storing context data received from a data delivery system (11), the distributed storage system (1) comprising a context data store (14) comprising a plurality of nodes for storing said context data, wherein the nodes (140) are each associated with a node score range, the nodes comprising at least one auxiliary data structure storing a mapping between a key and auxiliary information, each auxiliary data structure being associated with an auxiliary score range. The distributed storage system is configured to:
- receive a message from an external application server in the data delivery system (11), the message comprising context data represented by a key-value pair, and auxiliary information associated with said key-value pair;
- apply a hashing function to an identifier of the key, which provides a score value;
- determine the node score range, among said node score ranges associated with the nodes (1402), which comprises the score value;
- store the key-value pair in the node corresponding to said node score range,
- determine the auxiliary score range, among said auxiliary score ranges associated with the auxiliary data structures, which comprises the score value;
- store the auxiliary information in the auxiliary data structure corresponding to the determined auxiliary score range.

## Description

### Technical field

The invention generally relates to storage systems and in particular to a distributed system for storing context data.

A major challenge for modern computing systems is to handle big data while maintaining a high level of performance. Such challenge is particularly critical for systems supporting user sessions with an external device such as a user device, these sessions generating a huge volume of context information that are needed to be stored for some time.

In such systems, a high level of consistency and availability of context information is needed.

The processing of a session is generally distributed on a plurality of application servers. In a session, context information is conventionally stored locally in the application servers. More specifically, different parts of the context information are generally stored locally on application servers in the form of sub-sets of information context. The plurality of sub-sets of the context constitutes the context associated with the considered session.
In US 8 473 626, a first conversation opens and identifies a session, while a second conversation joins the session, both conversations being able to share the context whatever their protocol.

However, such solution is not adapted to support machine failures while ensuring service continuity for users. User context information, as handled, has poor resilience in such situations. Further, such solution does not enable optimized storage of the context information and requires important resources at the applications servers

There is accordingly a need for a system and a method enabling optimized storage of user context information.

### Summary

To overcome these problems, there is provided a distributed storage system for storing context data received from a data delivery system, the distributed storage system comprising a context data store comprising a plurality of nodes for storing the context data. Advantageously, the nodes are each associated with a node score range. The nodes comprise at least one auxiliary data structure storing a mapping between a key and auxiliary information, each auxiliary data structure being associated with an auxiliary score range. The distributed storage system is configured to:
- receive a message from an external application server in the data delivery system, the message comprising context data represented by a key-value pair, and auxiliary information associated with the key-value pair;
- apply a hashing function to an identifier of the key, which provides a score value;
- determine the node score range, among the node score ranges associated with the nodes, which comprises the score value;
- store the key-value pair in the node corresponding to the node score range,
- determine the auxiliary score range, among the auxiliary score ranges associated with the auxiliary data structures, which comprises the score value;
- store the auxiliary information in the auxiliary data structure corresponding to the determined auxiliary score range.

In one embodiment, the distributed storage system may comprise an initialisation unit configured to initially store each auxiliary data structure in a node of the context data store, the initialisation unit being configured to store an auxiliary data structure in a node if the node score range associated with the node includes the lower threshold of the auxiliary score range associated with the auxiliary data structure.

In one embodiment, the identifier of the key to which the hashing function is applied may be the name of the key.

The initialisation unit may be configured to generate a name for each auxiliary data structure associated with an auxiliary score range, the name being selected such that the application of the hashing function to the name of the auxiliary data structure provides a score value which corresponds to the lower threshold of the auxiliary score range associated with the auxiliary data structure.

In one embodiment, the name of each auxiliary data structure may comprise random letters and a name suffix, the name suffix being selected such that the application of the hashing function to the name of the auxiliary data structure provides a score value corresponding to the lower threshold of the auxiliary score range associated with the auxiliary data structure.

In some embodiments, the system may be hosted in a cloud system.

In some embodiments, the distributed storage system may comprise at least one proxy configured to exchange messages with the data delivery system.

The number of proxies used by the distributed storage system may be determined dynamically from the number of requests received from the application servers per second.

In some embodiments, the nodes of the context data store may be hosted on one or more machines.

In some embodiments, the distributed storage system may be configured to add an identifier to each message received from the data delivery system, the identifier identifying an application server of the data delivery system from which originates the message.

The nodes score ranges may be delimited by a system lower threshold and a system upper threshold, the hashing function comprising applying a CRC function modulo the system upper threshold.

In some embodiment, the number of node score ranges assigned to the nodes of the data context store may be dynamically changed during runtime by generating a permutation of the ranges.

Each node may comprise a server, the distributed storage system comprising issuing one or more commands to the server corresponding to the destination node to store the auxiliary information in a node.

In some embodiments, the auxiliary information may comprise different types of information, a command being issued for each type of information.

In some embodiments, the context data may be pushed from the data delivery system to the distributed storage system in response to an interruption or failure of an application server in the data delivery system.

The context data may be retrieved from the distributed storage system by the data delivery system to restore an interrupted session.

In some embodiments, the auxiliary information may comprise the expiry date of the context data, the distributed storage system comprising a time-out Handler configured to check the expiry date associated with each key-value pair stored in the context data store at different checking times, the time-out handler being further configured to delete a key/value pair from the context data store if the expiry date associated with the key-value pair has been reached or exceeded at a verification time.

There is further provided a method for storing context data received from a data delivery system comprising a context data store, the context data store comprising a plurality of nodes for storing the context data, the nodes are each associated with a node score range, the nodes comprising at least one auxiliary data structure storing a mapping between a key and auxiliary information, each auxiliary data structure being associated with an auxiliary score range. The method comprises:
- receiving a message from an external application server in the data delivery system, the message comprising context data represented by a key-value pair and auxiliary information associated with the key-value pair;
- applying a hashing function to an identifier of the key, which provides a score value;
- determining the node score range, among the node score ranges associated with the nodes, which comprises the score value;
- storing the key-value pair in the node corresponding to the node score range,
- determining the auxiliary score range, among the auxiliary score ranges associated with the auxiliary data structures, which comprises the score value;
- storing the auxiliary information in the auxiliary data structure corresponding to the determined auxiliary score range.

In some embodiments, the method comprises method steps corresponding to any one of the distributed storage system functions set out above.

There is further provided a computer program comprising program code instructions for executing the method according to any of the preceding features, when the program is executed on a computer.

### Brief description of the drawings

The accompanying drawings, which are incorporated in and constitute a part of this specification, illustrate various embodiments of the invention and, together with the general description of the invention given above, and the detailed description of the embodiments given below, serve to explain the embodiments of the invention :
[Fig.1] is a diagrammatic view of an exemplary environment implementing a distributed storage system, according to some embodiments;
[Fig.2] is a diagrammatic view of an application server;
[Fig.3] is a flow diagram depicting the exchanges from an application server to a context data store, according to one exemplary embodiment;
[Fig.4] is a flowchart illustrating the context data storing method, according to some embodiment;
[Fig.5] is a flowchart illustrating the process of associating value ranges to nodes of the context data store, according to one embodiment; and
[Fig.6] is a flowchart depicting the storage of auxiliary information in a node of the context data store; and
[Fig.7] represents an exemplary implementation of the context data store.

### Detailed description

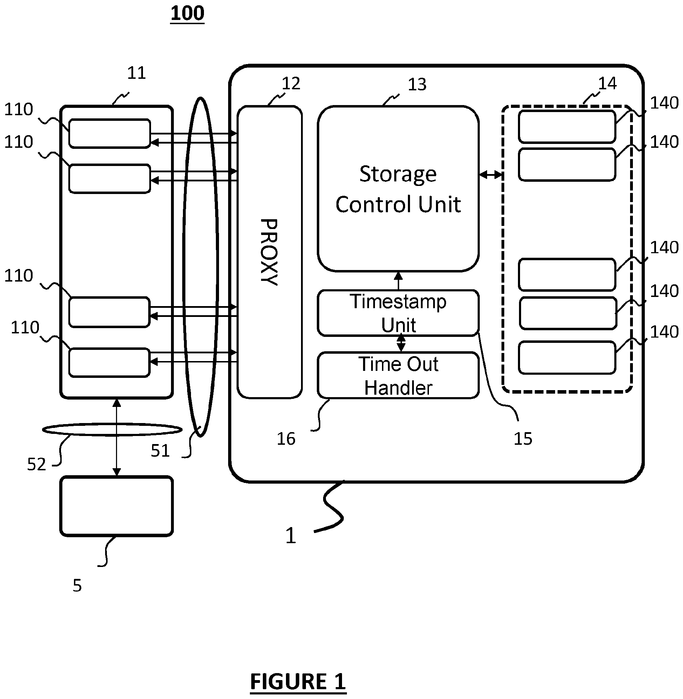

Figure 1 is a diagrammatic view of an exemplary operating environment 100 implementing a distributed storage system 1, according to some embodiments.

The distributed storage system 1 may be connected to a data delivery system 11 comprising a set of application servers 110, each executing at least one client application, though a network 51. The execution of each client application generates user context data. Each application server 110 may be configured to establish user sessions with a user device 5.

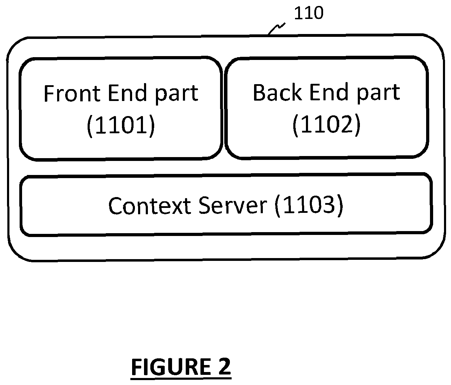

As depicted in figure 2, each application server 110 may comprise a Front End (FE) part 1101, a back end (BE) part 1102 and a context server (CS) 1103.

The front end part 1101 may comprise computing components and applications dedicated to the interactions with external user devices.

The back end part 1102 may comprise computing components and applications providing simplified access to data stored in persistent storage.

The Context Server 1103 may be configured to manage the context data generated during the execution of an application running on the application server 110.

A session generally comprises a number of 'conversations' and can comprise a set of transactions. A session is associated with a 'context data' which can be generated by the context server 1103 and/or provided by an external device 5. A conversation refers to a communication between two components. A transaction refers to one or more conversations and a set of processing functions that are executed to process a query received from a user device. A 'User context' (also called hereinafter 'user context data' or 'context data') refers to data relating to a user and being received, used and/or generated during the processing of a user session (for instance, data used by the data delivery system 11 for executing the required functionalities). Context data thus encompass data related to a user which are used to execute functions associated with a session executed for the user.

The context data may be generated by the application servers 110 and/or may be provided by an external device.

At least some of the application servers 110 may store context data generated during a user session in the distributed storage system 1 instead of storing the data locally. The context data form volatile data which have limited lifetime. Temporary storage of the context data may be needed by one or more application servers 110 during sessions.

A session comprises establishment of conversations between an external device and one or more application servers 110 of the system 11.

During a session, the external device 5 and the data delivery system 11 may operate in a client/server mode, the data delivery system 11 operating in one of the client/server modes while the external device 5 operates in the other mode.

Each application server 110 executes at least one software application.

The application servers 110 may form groups of application servers dedicated to a software application, each application server of the same group processing independently the software application to which the group is dedicated, the application servers storing a part of the context of a session.

A communication (corresponding to a 'conversation') may be established between a first component and a second component. The first and second components may include an external device 5 and an application server 110 of the data delivery system 11 or two application servers 110 of the data delivery system 11. A protocol may be used for each conversation established between the two components.

To establish a conversation, a call may be initiated from the first component to the second component, the call being then routed to the second component. A conversation is configured to share the context of another conversation if the call specifies an existing session identifier corresponding to the other conversation.

Context data may comprise data input by the user through a user device 5 during a session. For example, in an application of the invention to a travel provider system 11, the context data may include travel parameters inputted y a user to search for a travel product, such as a departure location and an arrival location. The context data may further comprise data generated by an application server 110 during execution of an associated software application running on the data delivery system 11.

The application servers 110 may run on a same machine or on a plurality of separate machines. The machines may include virtual machines. The application servers 110 may share a common processor or have separate processors.

A same software application may be executed by several application servers 110.

According to an aspect of the invention, the context data may be associated with auxiliary information representing information relating to the context data. The auxiliary information may comprise for example data expiry information (also referred to herein as "timeout information") representing information relating to the life time of the context data. Expiry information can be used to determine the date at which the corresponding context data will expire so that they can be destroyed by the distributed storage system 1. Until expiry of the context data, an application server 110 may access the context data, for example to read them or update them.

In one embodiment, the data expiry information may include a date (expiry date) representing the date at which the associated context data will expire. The following description of some embodiments will be made mainly with reference to auxiliary information comprising expiry date information represented by a date (also referred to hereinafter as 'expiry date') for illustration purposes only.

The expiry date information associated with context data may be predefined or determined or fixed by the application server 110 from which the key/value pair (context data) originated.

Each application server 110 may execute a software application (also referred to simply as "an application"), the execution of the application being triggered during a session established between an external device 5 (such as a user device) connected to the data delivery system 11 and the data delivery system 11 through a network 52. The execution of an application executed by an application server 110 in connection with a session may trigger generation of context data. The context data may be reused during a same session or a different session initiated between the same user and the data delivery system 11.

An external device 5 may be a personal computing device, a tablet computer, a thin client terminal, a smartphone, and/or other such computing device. A user device 5 may host web browsers and/or custom applications software (e.g., a client system) and may include a graphical user interface.

A network 51 or 52 may include one or more private and/or public networks (e.g., the Internet) that enable the exchange of data such as the Internet, a local area network (LAN), a wide area network (WAN), a cellular voice/data network, one or more high speed bus connections, and/or other such types of communication network. Each communication network 51, 52 may use standard communications technologies and/or protocols such as 4G, future 5G, Ethernet, 802.11, TCP/IP (Transmission Control Protocol/Internet Protocol, HTTP (Hypertext Transport Protocol), FTP (File Transfer Protocol), etc. Data can be exchanged over each network 51, 52 according to different data exchange technologies and/or formats such as the hypertext markup language (HTML) and the extensible markup language (XML).

In an exemplary implementation of the invention, the data delivery system 11 may be a travel provider system delivering flight products to a user in response to a user request. A session may be initiated between the user and the travel delivery system 11 to enable booking of a flight product by a user during the session. During the session, the user may input data through the user device 5 and select data triggering generation of context data which are not to be stored locally on the user device. Context data may for example be stored in the distributed storage system 1 if the user initiates a session for booking a flight but finally does not terminate the session. The context data generated during such incomplete session may be stored in the distributed storage system 1 for subsequent use by the user, for example if the user connects again to the travel delivery system 11 to initiate a new session, the context data being used for example to reload the data of the previous session or resume an interrupted session.

The data delivery system 11 may comprise a network router for routing external and internal traffic. Incoming messages may be intercepted by the network router which then routes the message to a target component in the system 11.

When an application server 110 needs to store context data to the distributed storage system 1, the application server 110 may open a conversation with the network router.

The request may be then routed to an application which returns a response to the request. The session may be then updated using the session data returned by the application.

A conversation between the application server 110 and the distributed storage system 1 may be then initiated (for example in an acknowledgement mode).

A conversation timer may be triggered to measure the duration of the conversation.

The data delivery system 11 may then push the session data on the distributed storage system 1. The session data may comprise conversation data and context data. The session data may further comprise conversation backend data. The distributed storage system 1 may send an acknowledge message to the data delivery system 11.

An application server 110 may send the context data to the distributed storage system 1 in the form of a set of key/value pairs, each key/value pair comprising a key and a value for the key. Each key/value pair is further associated with auxiliary information, such as expiry information.

A client application running on an application server 110 in the data delivery system 11 may send the context data to the distributed storage system 1 using a message embedding the context data. The message may have a message format suitable for transmission of the message from the data delivery system 11 to the distributed storage system 1 through the network 52. Each message may further comprise a command such as an add, a delete or update command. Various types of commands may be used to specify an addition, deletion, or an update related to a key/value pair.

Turning back to figure 1, the distributed storage system 1 may comprise a context data store 14 used as a database. The context data store 14 comprises a plurality of storage nodes 140. The context data store 14 may be configured to dynamically shard the data (key/value pairs and associated auxiliary information) across the nodes 140.

The distributed storage system 1 may be advantageously hosted in a distant platform such as a cloud system.

The distributed storage system 1 may further comprises a proxy 12 configured to receive requests from the application servers 110.

The proxy 12 enables communication between the application server 110 outside the distant platform (cloud system) and the context data store 14 which is located in the distant platform.

Each application server 110 may communicate with the Proxy 12 using a data exchange protocol. The Proxy 12 may in turn exchange data with the context data store 14 using the same or another data exchange protocol.

The distributed storage system 1 may be a stateless storage system configured to store context data in the context data store 14 and manage the lifetime of the context data to destroy expired context data depending on their associated expiry information.

The proxy 12 enables access to data from outside application servers 110 and may be configured to insert at least some of the auxiliary information to the messages comprising the received key/value pairs.

Each application server 110 may connect to any node of the context data store 14 through the proxy 12. The proxy 12 further ensures routing of the information received from the external application servers to the nodes 140.

In some embodiments, the context data store 14 may comprise two or more proxies 12, the number of proxies used depending on the traffic level, such as on the number of transactions (number of requests from application servers 110) per second.

In one embodiment, the distributed storage system 1 may comprise an orchestrator (not shown) to dynamically change the number of proxies 12 used to handle the communications between external applications 110 and the distributed storage system 1.

In one embodiment, the distributed storage system 1 may comprise a load-balancing unit to balance the load between the plurality of proxies 12 according to load-balancing criteria.

The following description of some embodiments of the invention will be made with reference to the use of a unique proxy 12 to facilitate the understanding of such embodiments and for illustration purpose only.

In the context data store 14, the received context data are distributed across the different nodes 140 of the data store (a node of the data store 14 may be further referred to as a "pod" or a "container"). A node 140 of the context data store 14 may be hosted on one or more machines (servers), including virtual machines.

The context data stored in the context data store 14 may be distributed in the different storage nodes 140 based on a tree structure representing the context data, each node of the tree corresponding to a storage node 140.

The nodes may further comprise data structures storing the auxiliary information associated with the key-value pairs.

The distributed storage system 1 may be used in case of machine failure, for example if the local storage system hosted in the system 11 fails. Alternatively, the distributed storage system 1 may be used as the main storage system for storing the context data generated in the data delivery system 11 during sessions. The following description of some embodiments of the invention will be made with reference to the use of the distributed storage system 11 as a main storage for storing context data generated during user sessions executed by the data delivery system 11.

In some embodiments, the context data stored in the distributed storage system 1 may be used to restore a session on the data delivery system 11 in case of failure of a machine of the data delivery system 11 or an interruption of a session due to a device or component failure. This enables fastly resuming a session on a user device 5 in case of interruption of the session on a machine.

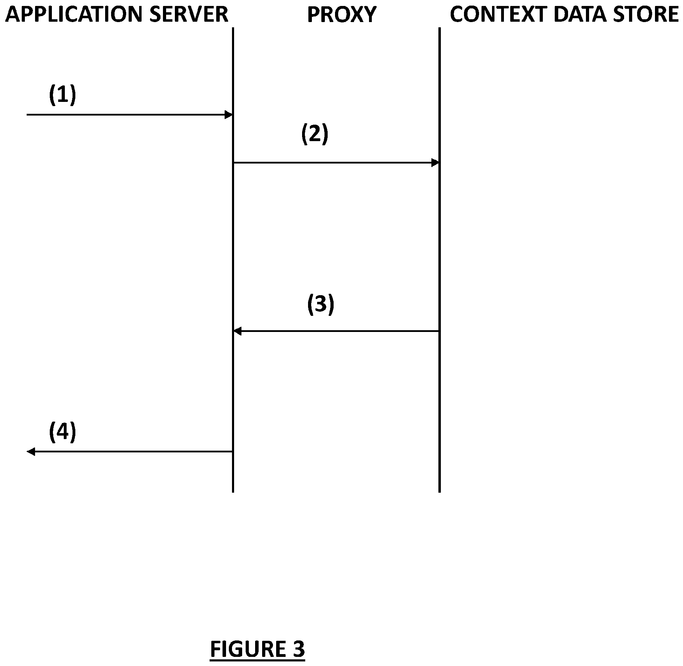

Figure 3 is a flow diagram depicting the process of updating context data stored in the context data store 14 of the distributed storage system 1.

An update request may be sent (1) to the distributed storage device 1 by an application server 110 to update context data stored in the context data store 14. The update request emitted to the distributed storage device 1 may be pushed from the application server 110 through a PUSH message to the proxy 12.

The message request may identify one or more keys whose values are to be updated as well as the new value for the key.

A key is associated with a Key name. A key may have different types such as a string type. The value of a key may be a string value or a more complex data structure such as a list of string elements, a collection of unsorted string elements, a collection of sorted elements comprising string elements with each string element being associated with a floating number value (also called score). For a key value comprising an auxiliary data structure of elements, the elements are sorted by score which enable accessing elements of the key value by specifying a range of scores. A key value may also comprise maps (also called "hashes") composed of fields associated with values, a field and a value being strings or bit arrays comprising bits.

The distributed storage system 1 may support various types of commands received from an application server 110 such as an add, a delete or an update command depending on the types of the key values. Update commands related to a key may for example include a push command to append a value to the head or tail of the key if the key value is a list of string elements or a command to update the key value and return the old value. Delete commands may include a command for deleting an element of a key value.

The proxy 12 may then send (2) an update message to the node 140 hosting the key identified in the message. The proxy 12 may add additional data to the update message request and/or transform some fields of the message.

A node 140 of the context data store 14 storing the key/value pair may update the pair specified in the update message request, in response to the update request received from the proxy 14 and return a response (3) to the proxy 12, which then in turn may return a response to the originating application server 110 (4).

Each context data pushed into the data store 110 may be time stamped with a date representing the date at which the context data have been stored in the data store 14 for the first time or the date at which context data stored in a node 140 of the data store is updated.

The proxy 12 may be configured to add information to a message received from the data delivery system 1 specifying a key and a value for the key, such information being inserted at a particular location of the message such as at the prefix. In one embodiment, the added information (prefix for example) may represent a client identifier representing the application server 110 from which the key value pair originated.

The distributed storage system 1 may operate according to three operating modes :
- In a shadow mode, an update request related to a context key/value pair may be pushed to the context data store 14;
- In an asynchronous mode, an update request related to a context key/value pair may be pushed to the context data store 14 and then the corresponding entry in the context data store 14 may be retrieved from the corresponding node 140 using a RETRIEVE on demand request;
- In a Synchronous mode : an update request related to a context key/value pair may be pushed to the context data store 14 and then the corresponding entry in the context data store 14 may be retrieved from the corresponding node 140 using a RETRIEVE on each message .

Context data may be first stored as In-Memory objects by each application server 110, then serialized and pushed to the distributed storage system 1 for the lifetime associated with the context data. Context data may be fetched and deserialized from the distributed storage system 1 at the launch of the application server 110 or alternatively when needed for a client transaction. Pushing Context data to the distributed storage system 1 has limited extra costs (inferior to 5%). Further, the costs related to the operation of fetching the context data from the distributed storage system 1 are limited and do not impact real-time client traffic processing.

In some embodiments, a data consistency managing method may be also implemented to ensure consistency of the context data during context data updates, and a parallel access to context data.

This avoids simultaneous access to conversations and sessions by two distinct application servers.

Storing of context data into the distributed storage system 1 may be performed synchronously to avoid access to data context related to a (N-1)^{th} context during the processing a the N^{th} transaction.

Each application server 110 may monitor a conversation counter counting the number of conversations. In some embodiments, a unique conversation counter may be used to count the conversations established by the different servers.

As shown in figure 1, the distributed storage system 1 may further comprise a Timestamp unit 15 configured to timestamp the data received by the proxy 12 and a Time-Out Handler 16 configured to handle the data stored in the nodes 140 of the context data store 14 according to the timestamp and to expiry date information associated with a key-value pair stored in the distributed storage system 1. The Time-Out Handler 16 may be configured to check the expiry date associated with each key-value pair stored in the context data store 14 at different checking times. The Time-Out Handler 16 may be configured for example to delete a key/value pair in the context data store 14 if the associated expiry date information has been reached or exceeded at a checking time.

According to some embodiments, the distributed storage system 1 may comprise a storage control unit 13 configured to store a key/value pair and the associated auxiliary information specified in a request using range values associated with the nodes and a hashing of the key .

More specifically, in response to the receipt of a storage message, such as an add or update message identifying a key/value pair associated with auxiliary information, the storage control unit 13 may be configured to store the key/value pair in a selected node 140 while storing the expiry date information in the same or in another node 140 of the context data store 14. Further, the storage control unit 13 may be configured to store the key/value pairs and associated auxiliary information across the different nodes in an optimized way so as to ensure load balancing.

The storage control unit 13 applies a storage method for determining a target node in which the auxiliary information is to be stored so as to ensure as much as possible storage of the auxiliary information in the same node as the associated key/value pair. Colocation of the key/value pair and of the associated auxiliary information ensures best performance.

Although, the storage control unit 13 is represented as a separate component in the distributed storage system 1, the skilled person will readily understand that in some embodiments, the storage control unit 13 may be part of the proxy 12 or any other component of the storage system 1.

In some embodiments, the context data store 14 may comprise one or more master nodes and one or more slave nodes being connected to the master nodes and being exact copies of master nodes. When a master node and a slave node are connected, the master node keeps the slave updated by sending a stream of commands to the slave node to replicate the effects on the dataset happening in the master side due for example to client writes, keys expired or evicted.

Each node 140 of the context data store 14 may be initially associated with a range of scores (each score representing a real number).

Further, the auxiliary information associated with a key/value pair (for example the key expiry data) may be stored in one or more auxiliary data structures 1402.

The auxiliary data structure may be advantageously sorted by auxiliary data value.

In some embodiments, each auxiliary data structure 1402 may store the correspondence between auxiliary data and a key-value pair. An auxiliary data structure 1402 may comprise one or more entries, each entry storing a key identifier (such as a key name) identifying a key-value pair and the auxiliary data associated with the key.

The auxiliary data structures may for example represent sorted set of string elements (corresponding to key names) associated with auxiliary data values (auxiliary data values associated with the keys). The auxiliary data structures 1402 may be implemented for example as a sorted array.

The auxiliary data structures 1402 may be stored in the nodes 140 of the context data store 14.

In one embodiment, each node may comprise at least one auxiliary data structure 1402.

Each auxiliary data structure 1402 may itself correspond to a score range (hereinafter referred to as 'auxiliary score range' to distinguish over the node score ranges).

The number N of auxiliary data structures 1402 may be fixed. Alternatively, the number of auxiliary data structures 1402 may be dynamically changed during runtime.

The auxiliary score ranges may depend on the number N of auxiliary data structures.

The auxiliary score ranges may have different or equal lengths or be fixed.

It should be noted that the different auxiliary score ranges can be independent of the node score ranges.

Each auxiliary data structure 1402 can be seen itself as a key-value pair stored in a node 140.

In an application of the invention to auxiliary data representing key expiry information, each auxiliary data structure 1402 forms an expiry queue.

The storage control unit 13 may be configured to determine the node 140 in which a key/value pair is to be stored or updated, in response to the receipt a message being related to the key/value pair.

The storage control unit 13 may then apply a hashing function to the key name, which provides a key score value.

The node among the nodes 140 of the context data store 14 which is associated with a score range in which the key score value is comprised is then selected by the storage control unit 13.

The storage control unit 13 may then store the key/value pair in the selected node if the message is a key storage message or update its value in the selected node if the message is a key update message.

Advantageously the auxiliary data associated with a key-value pair is stored in the context data store 14 to ensure colocation between a key and the associated auxiliary data.

The storage system 1 may comprise an initialisation unit 10 configured to initialize the auxiliary data structures 1402 before runtime such that colocation between a key and associated auxiliary information is optimized.

During the initialisation process, the initialisation unit 10 may assign a selected name to each auxiliary data structure 1402 and then apply a hashing function to the auxiliary data structure name to obtain an auxiliary score value. Such auxiliary score value then defines a lower threshold ('lower auxiliary threshold'). An auxiliary score range comprised between the lower auxiliary threshold and an upper threshold (upper auxiliary threshold) is then determined.

The correspondence between the auxiliary data structure and the auxiliary score range thus determined may be then stored in a memory accessible by the context data store 14 (such memory may be internal or external to the context data store).

Each auxiliary data structure 1402 is thus stored in a node 140 which is itself associated with a node score range comprising values ranging between a lower threshold (lower node threshold) and an upper threshold (upper node threshold). In some embodiments, the initialisation unit 10 may be configured to store an auxiliary data structure 1402 in a node 140 if the node score range associated with the node 140 includes the lower threshold of the auxiliary score range associated with the auxiliary data structure 1402.

Advantageously, the suffix of the name of the auxiliary data structure 1402 may be selected by the initialisation unit 10 such that the application of the same hashing function as the one used by the storage control unit 13 to determine a hashing of the keys provides a value that corresponds to the lower threshold (lower auxiliary threshold) of the auxiliary score range associated with the auxiliary data structure.

Advantageously, the initialisation and storage control units 10 and 13 enable, for most of the auxiliary data, storage of the auxiliary data in the same node as the node in which the corresponding key/value pair is stored. However, it may occur that in a very limited number of cases that auxiliary data and corresponding key-value pair be stored in different nodes.

In an embodiment where the number of nodes 140 is a power of two, for all key-value pairs, the auxiliary data are stored in the same node as the node in which the corresponding key/value pair is stored.

In an application of the invention to auxiliary data representing expiry information of the key-value pairs, the sorting of the auxiliary data structures 1402 ensures optimized management of expiry of key-value pairs by the timeout handler 16, which is thus enabled to fastly remove from the auxiliary data structures 1402 the expired key-value pairs.

When the number of the auxiliary data structures 1402 is fixed at initialisation time, the time needed by the timeout handler to dequeue expired key-value pair is fixed and independent of the number of keys stored in the context data store 14.

In such embodiment, the Time out handler 16 may be configured to monitor the Time To Live (TTL) of the context data stored in the nodes 140 based on the expiry data information (auxiliary data) associated with the context key/value pairs stored in the auxiliary data structures 1402. In such exemplary embodiment, the auxiliary data structures 1402 may form Time To Live (TTL) queues which can be used by the Time Out handler 16 to manage the TTL of the context data stored in the nodes 140.

The Timeout handler 16 may be configured to monitor, according to a monitoring period, the data stored in the nodes 140 of the context data store 14. The Timeout handler 16 may access nodes 140, at a given access instant time corresponding to the monitoring period, retrieve the key-value pairs associated with an expiry date information (auxiliary data) which is earlier or equal to the access time using the auxiliary data structures 1402 and add the retrieved key/value pairs into one or more removal queue. The removal queues may comprise a queue per application server 110.

The timeout handler 16 may further trigger an operation or action before removal of an expired key-value pair from the removal queues, such as for example emit a notification to request deletion of data related to the expired key-value pair, such as product data if the data delivery system provides products (e.g. tickets), if the transaction has not been completed (no purchase of the product by the user).

It is an advantage of the invention to enable colocation of key-value pairs with the auxiliary data in the nodes of the context data store 14. As each node may be implemented on a server or machine, such colocation limits the number of connexions on the node servers or machines, and grouping of the network transfers, thereby increasing the system performances. A same message can be for example used for requesting a writing operation on the key-value pair and on the auxiliary data.

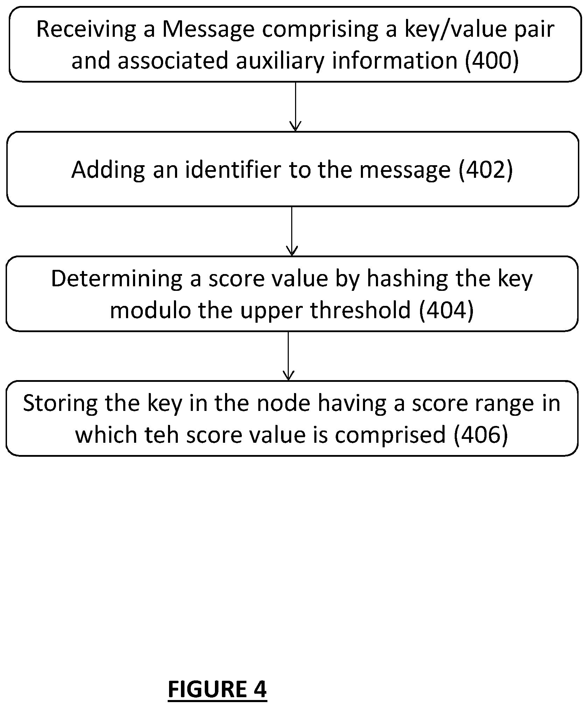

Figure 4 depicts a method of storing key/value pairs in the nodes 140 of the data store 14.

The storing method is implemented to co-locate as much as possible the key/value pair and its associated auxiliary information to optimize the performance of the system 1.

The data context store 14 may be a slot system associated with a value slot defined by a slot or range between a system lower threshold Tlow and a system upper threshold Tup (such as for example 0 to 16383) capable of distributing the keys on the different nodes 140. At the context data store setup, slot ranges may be assigned to each node 140. Considering an exemplary application of the invention with 3 master nodes and an overall range associated with the nodes of the context data store 14 equal to [0, 16383], the following slots (or ranges) may be assigned to the master nodes :
- Node-1: 0-5461
- Node-2 : 5462-10922
- Node-3 : 10923-16383.

In step 400, a message comprising a key/value pair and associated auxiliary information is received from an application server 110 by the storage distributed system 1.

In step 402, an identifier may be added to the message including the key/value pair, for example in the form of a prefix, the identifier identifying the originating application server.

In step 404, the key comprised in the received message is hashed with a hashing function modulo the upper threshold Tup, such as the CRC16 algorithm applied to the key modulo 16383, to determine a corresponding slot value. For example, the hashing function CRC16( ) applied to the key "MYKEY_ABC", modulo the upper threshold value '16383' may be: CRC16(MYKEY_ABC) % 16383 = 2394.

In step 406, the hashed key is stored in the node corresponding to the determined slot (in the above example, the hashed key MYKEY_ABC would be stored to Master-1 node).

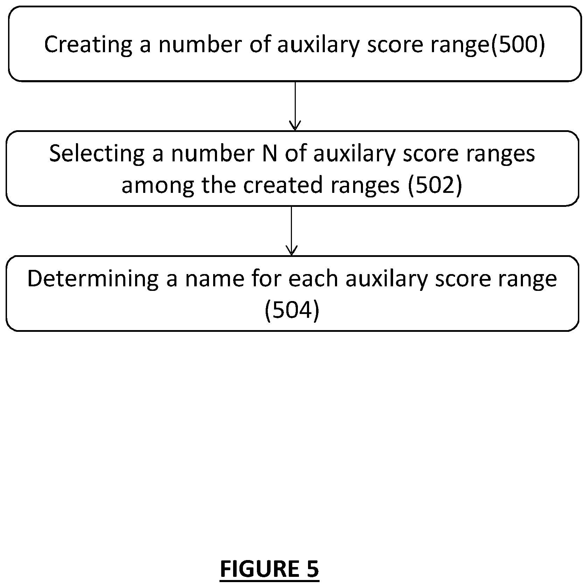

Figure 5 depicts the method of creating auxiliary data structures 1402 in the nodes 140, according to some embodiments.

In step 500, a number of non-overlapping slot ranges are created.

For example, the following non-overlapping ranges may be initially defined from the values:
[0 8192 12288 4096 2048 10240 14336 6144 7168 15360 11264 3072 5120 13312 9216 1024 ...]

In step 502, a number N (for example N=16) of values may be then kept among the created ranges, the selected ranges being sorted to define the N=16 non overlapping ranges where the auxiliary information (keys expiration values) are to be stored:
[0-1024[[1024 - 2048[[2048 - 3072[...

The number N of slot ranges may be dynamically changed during runtime by generating a permutation of slots.

In step 504, names may be generated for each auxiliary score range, created in step 500.

In step 504, names may be generated for each auxiliary data structure 1402 such that they satisfy a constraint ('name constraint') related to the auxiliary score range determined in step 502. In one embodiment, the name constraint is satisfied if the application of the hashing function to the generated name of the auxiliary data structure 1402 provides a score value that corresponds to the lower threshold of the auxiliary score range associated with the auxiliary data structure 1402 in step 502. This enable optimized storing of the auxiliary data structure 1402 in the nodes 140.

In some embodiments, only a part of the name comprising a number of letters forming the auxiliary data structure signature may be determined to ensure that the auxiliary data structure name satisfies the name constraint, depending on the type of hashing function, while the other parts of the name of the auxiliary data structure can be any string. In particular, the number of letters specifically selected to satisfy the name constraint may be placed at the end of the auxiliary data structure name (last letters or suffix of the auxiliary data structure name).

In an exemplary embodiment, 4 letters (for example "ABCD") may be selected and positioned at the end of the auxiliary data structure name. The name of an auxiliary data structure stored in a node 140 of the data store 14 is then chosen to satisfy the constraint according to which the hashing of the name 'AuxiliaryDataStructureNameABCD' provides a value corresponding to the lower threshold of the corresponding auxiliary score range. For example, the names of the auxiliary data structures may have the pattern AuxName:zzzz where zzzz are the selected letters.

The method of figure 5 thus enables determining the four letters that ensures that the auxiliary data structure name satisfies the name constraint.

For example:
- a suffix ZZZZ is determined so that the application of the hashing function to the name AuxName:ZZZZ of the auxiliary data structure 1402 associated with the auxiliary score range [0-1024] provides a value equal to the lower threshold of the auxiliary score range, namely '0';
- a suffix XXXX is determined so that the application of the hashing function to the name AuxName:XXXX of the auxiliary data structure 1402 associated with the auxiliary score range [1024-2048] provides a value equal to the lower threshold of the auxiliary score range, namely '1024'.

The hashing function may be for example the CRC16 algorithm applied to the name of AuxName:ZZZZ modulo the system upper threshold of the whole range (16383).

This provides N (for example, N=16) names for the N auxiliary data structures 1402 associated with auxiliary score ranges and covering the whole system slot range [0; 16383].

For example, the following names of auxiliary data structures may be determined for the 16 auxiliary data structures :
- AuxName:BABH (Lower threshold 0 of the first auxiliary score range)
- AuxName:AAWS (Lower threshold 1024 of the second auxiliary score range)
- AuxName:BENE (Lower threshold 2048 of the third auxiliary score range)
- AuxName:AMRF (Lower threshold 3072 of the fourth auxiliary score range)
- AuxName:BASJ (Lower threshold 4096 of the fifth auxiliary score range)
- AuxName:AGLZ (Lower threshold 14336 of the i-th auxiliary score range);
- AuxName:BGYA (Lower threshold 15360 of the last auxiliary score range).

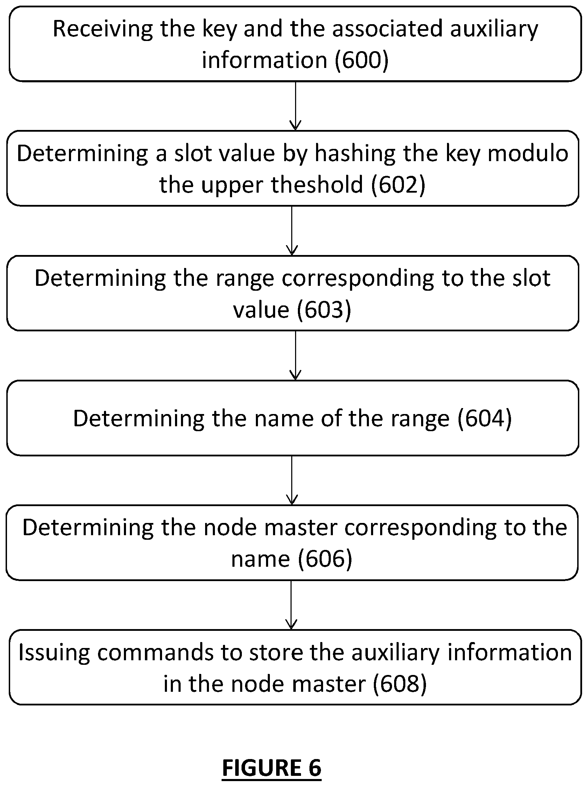

Figure 6 depicts the method of storing the auxiliary information associated with a key in the context data store 14 according to some embodiments (step 408 of figure 4).

Figure 6 corresponds to an embodiment where each key is associated with auxiliary information represented by expiry date information (timeout information).

In step 600, the key associated with the auxiliary information that is to be stored in the context data store 14 is received.

In step 602, the key is hashed using the cryptographic algorithm, which provides a score value. The hashing function may be for example the CRC6 algorithm applied to the key name MYKEY_ABC modulo the upper threshold of the system slot:
CRC16(MYKEY_ABC) % 16383 = 2394

This provides the score value 2394.

In step 603, the auxiliary score range corresponding to the node 140 in which the auxiliary information is to be stored is determined from the score value (for example 2394) computed in step 602. This comprises determining to which auxiliary score range among the N auxiliary score ranges defined for the auxiliary data structures 1402 the score value computed in step 602 belongs. For example, the slot value '2394' belongs to the range [2048 - 3072[.

In step 604, the name of the auxiliary data structure associated with the range determined in step 603 is retrieved (for example, the range [2048 - 3072[ corresponds to the name "AuxName:BENE").

In step 606, the node 140 (master node in embodiments where master and slave nodes are used) on which the auxiliary data structure 1402 associated with the name obtained in step 604 is determined. It will be in most cases the same node of the node on which the key is stored due to the auxiliary data structure naming.

For example, MYKEY_ABC (slot 2394) and "AuxNAme:BENE" (slot 2048) are both located on Node-1.

In step 608, one or more commands may be issued to the server corresponding to the node determined in step 606 to store the auxiliary information on the node. If the auxiliary information comprises different types of data (for example if the auxiliary information comprises key data and timeout data), a command may be issued for each type of data.

The various embodiments of the invention thus enable distributed storage enabling various application servers 110 running on one or more machines of the data delivery system 11 to use the same data and to update the same data while avoiding data update conflict.

The application servers 110 may then have concurrent access to the context data (for example to read or write the data) while enabling efficient management of the context auxiliary data, such as key expiry data.

The distributed storage system 1 is capable of maintaining a level of consistency between the different application servers. For example, if an application server 110 updates context data, the updates can be immediately executed on the context data store 14, with high consistency. In particular, the distributed storage system avoids loss of concurrent updates.

Further, the application server 110 may have parallel access to the context data, which still contributes to maintain a high latency and resilience of the data delivery system 11, while ensuring continuity of service in case of machine failure.

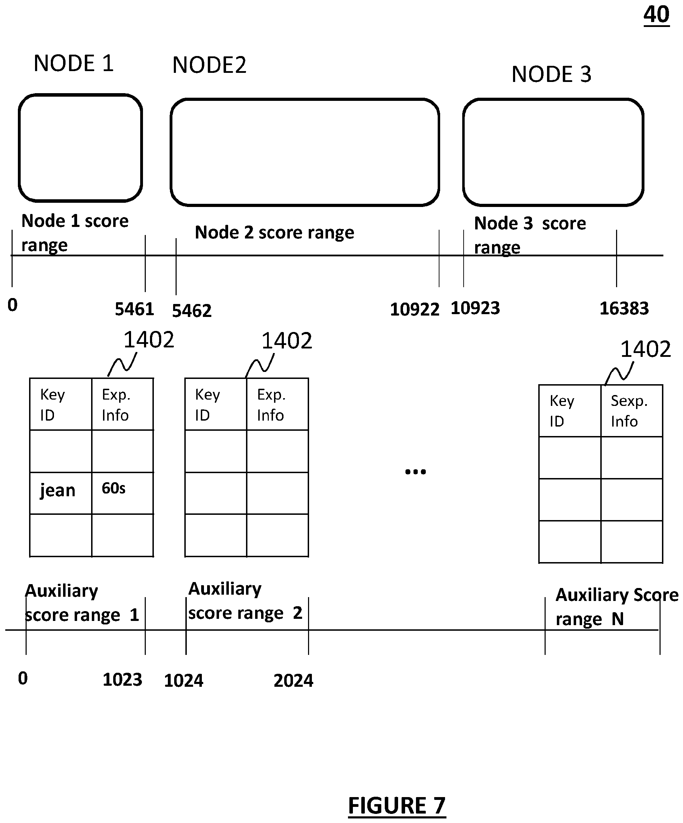

Figure 7 depicts an exemplary implementation of the distributed storage system 1 in which each auxiliary information corresponds to the expiry date associated with the corresponding key.

In the example, of figure 7, the context data store 14 comprises three nodes Node 1, Node 2 and Node 3, the nodes being associated with the following ranges like in the previous example:
- Master Node-1: Range 0-5461
- Master-2 : Range 5462-10922
- Master-3 : Range 10923-16383.

In figure 7, it is considered that a key-value pair having a the key name 'jean' and a key value '0612330034' has been stored in the context data store 14.

The key-value pair 'jean'/'0612330034' is further associated with expiry information (auxiliary data) equal to 60s.

At initialisation time, the name of each auxiliary data structure 1402 is chosen so that application of the hashing function to the name of the auxiliary data structure 1402 provides an auxiliary score value which defines the lower auxiliary threshold of the auxiliary score range associated with the auxiliary data structure 1402. The length of the auxiliary score range associated with an auxiliary data structure 1402 may be determined depending on different parameters including the number N of auxiliary data structures. The upper threshold is then derived from the lower threshold determined for the auxiliary score range and from the determined length. The correspondence between each auxiliary data structure 1402 and the determined auxiliary score range is then stored in a memory for subsequent access during the processing of a message related to a particular key by the distributed storage system 1.

Assuming that an update message is received to update the key, the storage control unit 13 may determine the node in which the key 'jean' is stored by applying a hashing function to the string 'jean' corresponding to the key name. Assuming that this provides a score value equal to '368', to determine the node storing the key 'jean', the storage control unit 13 may determine which nodes among the M nodes is associated with a node score range in which the value 368 is included. This corresponds in the example to the Node 1 which is associated with range [0, 5461].

To determine in which node the auxiliary information '60s' associated with the key 'Jean' is to be stored in an auxiliary data structure 1402, the hashing function is applied to the key name 'jean', which provides the value '368'.

The auxiliary data structure 1402 associated with an auxiliary score range in which the value 368 is comprised is then selected. Due to the naming process at initialisation time, it is ensured that the auxiliary data structure 1402 having such auxiliary score range has a very high likelihood to be included in the first node Node-1. In the considered example, the selected auxiliary data structure 1402 is the first one which has an associated auxiliary score range equal to [0; 1024[.

The embodiments of the invention thus ensure the consistency of context data stored across a set of distinct nodes 140.

The distributed storage system 1 advantageously provides an improved model for storing and accessing context information.

Furthermore, the methods described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein.

It should be noted that the functions, acts, and/or operations specified in the flow charts, sequence diagrams, and/or block diagrams may be re-ordered, processed serially, and/or processed concurrently consistent with embodiments of the invention. Moreover, any of the flow charts, sequence diagrams, and/or block diagrams may include more or fewer blocks than those illustrated consistent with embodiments of the invention.

While embodiments of the invention have been illustrated by a description of various examples, and while these embodiments have been described in considerable detail, it is not the intent of the applicant to restrict or in any way limit the scope of the appended claims to such detail. Additional advantages and modifications will readily appear to those skilled in the art. The invention in its broader aspects is therefore not limited to the specific details, representative methods, and illustrative examples shown and described.

## Claims

1. A distributed storage system (1) for storing context data received from a data delivery system (11), the distributed storage system (1) comprising a context data store (14) comprising a plurality of nodes for storing said context data, wherein the nodes (140) are each associated with a node score range, the nodes comprising at least one auxiliary data structure (1402) storing a mapping between a key and auxiliary information, wherein each auxiliary data structure (1402) is associated with an auxiliary score range, the distributed storage system being configured to:
- receive a message from an external application server (110) in the data delivery system (11), the message comprising context data represented by a key-value pair, and auxiliary information associated with said key-value pair;
- apply a hashing function to an identifier of the key, which provides a score value;
- determine the node score range, among said node score ranges associated with the nodes (1402), which comprises the score value;
- store the key-value pair in the node corresponding to said node score range,
- determine the auxiliary score range, among said auxiliary score ranges associated with the auxiliary data structures (1402), which comprises the score value;
- store the auxiliary information in the auxiliary data structure (1402) corresponding to the determined auxiliary score range.

2. The distributed storage system of claim 1, wherein the distributed storage system comprises an initialisation unit (10) configured to initially store each auxiliary data structure in a node (140) of the context data store (14), the initialisation unit being configured to store an auxiliary data structure in a node if the node score range associated with the node includes the lower threshold of the auxiliary score range associated with the auxiliary data structure.

3. The distributed storage system of any preceding claim 1 and 2, wherein the identifier of the key to which the hashing function is applied is the name of the key.

4. The distributed storage system of claim 2 and 3, wherein the initialisation unit is configured to generate a name for each auxiliary data structure associated with an auxiliary score range, the name being selected such that the application of the hashing function to the name of the auxiliary data structure provides a score value which corresponds to the lower threshold of the auxiliary score range associated with the auxiliary data structure.

5. The distributed storage system of claim 4, wherein the name of each auxiliary data structure comprises random letters and a name suffix, the name suffix being selected such that the application of the hashing function to the name of the auxiliary data structure provides a score value corresponding to the lower threshold of the auxiliary score range associated with the auxiliary data structure.

6. The distributed storage system of any preceding claim, wherein the system is hosted in a cloud system.

7. The distributed storage system of any preceding claim, wherein the distributed storage system comprises at least one proxy configured to exchange messages with the data delivery system (11).

8. The distributed storage system of claim 7, wherein the number of proxies used by the distributed storage system (1) is determined dynamically from the number of requests received from said application servers (110) per second.

9. The distributed storage system of any preceding claim, wherein the distributed storage system (1) is configured to add an identifier to each message received from the data delivery system (11), the identifier identifying an application server (110) of the data delivery system from which originates the message.

10. The distributed storage system of any preceding claim, wherein the nodes score ranges are delimited by a system lower threshold and a system upper threshold, the hashing function comprising applying a CRC function modulo the system upper threshold .

11. The distributed storage system of any preceding claim, wherein the number of node score ranges assigned to the nodes of the data context store (14) is dynamically changed during runtime by generating a permutation of the ranges.

12. The distributed storage system of any preceding claim, wherein each node (140) comprises a server, the distributed storage system comprising issuing one or more commands to the server corresponding to the destination node to store the auxiliary information in a node.

13. The distributed storage system (1) of any preceding claim, wherein context data are retrieved from the distributed storage system (1) by the data delivery system (11) to restore an interrupted session.

14. The distributed storage system (1) of any preceding claim, wherein said auxiliary information comprises the expiry date of the context data, the distributed storage system comprising a time-out Handler (16) configured to check the expiry date associated with each key-value pair stored in the context data store (14) at different checking times, the time-out handler being further configured to delete a key/value pair from the context data store (14) if the expiry date associated with the key-value pair has been reached or exceeded at a verification time.

15. A method for storing context data received from a data delivery system (11) comprising a context data store (14), the context data store comprising a plurality of nodes for storing said context data, wherein the method comprises associating each node (140) with a node score range, the nodes comprising at least one auxiliary data structure (1402) storing a mapping between a key and auxiliary information, each auxiliary data structure (1402) being associated with an auxiliary score range, wherein the method comprises:
- receiving a message from an external application server (110) in the data delivery system (11), the message comprising context data represented by a key-value pair, and auxiliary information associated with said key-value pair;
- applying a hashing function to an identifier of the key, which provides a score value;
- determining the node score range, among said node score ranges associated with the nodes (1402), which comprises the score value;
- storing the key-value pair in the node corresponding to said node score range,
- determining the auxiliary score range, among said auxiliary score ranges,, associated with the auxiliary data structures (1402), which comprises the score value;
- storing the auxiliary information in the auxiliary data structure (1402) corresponding to the determined auxiliary score range.
